# EUROPEAN PATENT APPLICATION

(11) **EP 1 903 016 A1**
(43) Date of publication of application: **26.03.2008**
(21) Application number: 07116700.1
(22) Date of filing: 18.09.2007
(51) Int. Cl.: C04B 35/83

(54) **Impregnation of stabilized pitch fiber performs with pitch during the preforming process**

(30) Priority: 19.09.2006 US 523026
(71) Applicant: Honeywell International, Inc., Morristown, NJ 07962 (US)
(72) Inventor: Fryska, Slawomir T., Granger, IN 46530 (US); LaForest, Mark L., Granger, IN 46530 (US); Simpson, Allen H., Buchanan, MI 49107 (US)
(74) Representative: Buckley, Guy Julian

(57) **Abstract**

An improved carbon-carbon composite and method of preparation. Thp carbon-carbon composite comprises a plurality of carbon fibers agglomerated and joined or consolidated together typically into a preform. The carbon fibers are impregnated with pitch prior to carbonization in order to enhance the density of the carbonized preform. The method comprises adding pitch powder to a preform and melting the pitch powder so as to uniformly impregnate the carbon fibers, thus enhancing the carbonized density of the preform.

## Description

### FIELD OF THE INVENTION

This invention relates generally to carbon-carbon composites and preforms and methods for their preparation. More specifically, the present invention relates to a method for increasing the density of carbon-carbon composites by adding pitch powder during the early stages of the preparation process, and before carbonizing. The carbon-carbon composites prepared by the present invention achieve a high initial density without the need for additional processing steps. The carbon-carbon composites of the present invention can be used, for example, in aircraft disc brakes among other applications.

### BACKGROUND OF THE INVENTION

Carbon-carbon composites are essential materials in a variety df high-technology applications requiring durability and strength at very high temperatures. For decades, these composites have been used in the disk brakes of jet fighters and Large passenger airliners due to their excellent friction performance, low weight, and resistance to thermal shock. Additional applications include disk brakes of land transportation vehicles such as tanks, special vehicles, rapid transit trains and racing cars, high-temperature structures such as gas jet-engine parts, rocket nozzles of launch vehicles, re-entry:, surfaces of space shuttles, walls of fusion reactors and other high-temperature industrial lequipment. [0003] Carbon-carbon composites typically comprise a carbon fiber substrate embedded in a carbonaceous matrix. Important factors in achieving good properties for the composite would include the properties of the carbon fibers, the carbon matrix microstructure, and the density of the composite. The particular processing route employed to make the carbon-carbon composite and the choice of the carbon precursor influence the density, macrostructure, and physical properties of the material, These variables also influence the thermal transport mechanism and properties in carbon-carbon composites.

The conventional method of preparing carbon-carbon composite preforms can be divided into a process of producing a preform using a carbon-based fiber or fabric, and a process of densifying the preform to meet application criteria. The method also typically includes an oxidation-resistance treatment to impart durability to the finished product.

One method of densification has been through vapor phase infiltration. In this process hydrocarbon gases are used to infiltrate the composite structure heated to high temperature and are made to crack within the structure. In principle, the gases should be made to infiltrate well into the pores and spaces of the material, and then crack. However, the vapors have a tendency to crack at the outer surface. This then blocks the passages into the inner parts of the material and closes the pores. In order to produce dense composites, the surfaces are ground and the components then reinfiltrated with vapor. Vapor phase infiltration is therefore a very slow process and usually requires many additional processing steps. It may take months of processing to achieve the desired density.

Carbon-carbon composites have also been densified by impregnation with a liquid phase pitch/phenolic resin followed by carbonization and high temperature heat treatment. Again, because of the limited amount of carbon fiber surface available a lower amount of carbon is able to infiltrate into the preform than is required, and a less than desired density for the carbon-carbon composite preform is produced. Additional processing steps are then required to achieve the target density for the composite. These additional processing steps result in higher manufacturing costs and much longer preparation times for carbon-carbon composite preforms. Accordingly, there is a need in the art for improved methods of densifying carbon-carbon composites and preforms.

### SUMMARY OF THE INVENTION

It is one of the objects of the present invention to provide an improved method for preparing a carbon-carbon composite which provides enhanced densit without the need for additional and costly preparation steps. The methods of the present invention comprise a step of providing a plurality of carbon fiber substrates which are agglomerated and then joined or consolidated together. Usually the carbon fibers are stacked on top of each other to a desired thickness, and then joined or consolidated in order to create a preform.

An important feature of the invention is impregnation with pitch during the preforming process. Preferably the pitch powder is added uniformly to the agglomerated carbon fibers. This is accomplished by adding pitch powder during the initial preform formation process, and prior to carbonization. The timing of the addition of the pitch may be before the carbon substrates are stacked, before the stacked substrates are consolidated, or after the stacked substrates are consolidated, but before carbonization.

During the carbonising step the pitch powder melts and impregnates the fibers. Impregnation of the fiber with pitch results in significantly higher density and allows the elimination of additional processing steps that are generally necessary to increase the density of the composite. The composite can also be treated with antioxidant in a post carbonization step.

The present invention is also directed to carbon-carbon composites and preforms with a good density. The carbon-carbon composites and preforms of this invention are typically prepared from polyacrylonitrile (PAN). The carbon-carbon composites and preforms of this invention generally include a plurality of consolidated carbon fiber substrates, wherein pitch has been added to the carbon fiber substrates jprior to carbonization. The pitch may have been added during carbonization of the stacked substrates. The pitch may also have been added prior to consolidating the substrates. Generally, the density of the carbonized carbon-carbon composites or preforms is approximately 1.0 gram/cm³ or greater,

### BRIEF DESCRIPTION OF THE DRAWINGS

The present invention will become more fully understood from the detailed description given below and the accompanying drawings. The drawings are given by way of illustration only. Accordingly, the drawings should not be construed as limiting the invention.

Figure 1 is a flowchart illustration of an embodiment of the method for manufacturing a carbon preform in accordance with the present invention.

Figure 2 is a flowchart illustration of another embodiment of the method for manufacturing a carbon preform in accordance with the present invention.

### DETAILED DESCRIPTION OF THE INVENTION

The present invention is directed to an improved carbon-carbon composite and preform. The present invention is also directed to an improved method for preparing a carbon-carbon composite and preform wherein pitch impregnation results in increased density without the need for additional process steps.

The methods of the present invention comprise a step of providing a plurality of carbon fiber substrates which are agglomerated and then joined or consolidated together. Typically the carbon fibers are stacked on top of each other to a desired thickness and then are joined or consolidated. An important feature of the invention is the impregnation of the fiber with pitch during the formation process. In order to impregnate the fiber, pitch powder is added during the initial formation process, and prior to carbonization. Preferably the pitch powder is added uniformly to the agglomerated carbon fibers. The timing of the addition of the pitch may be before the carbon substrates; are stacked, before the stacked substrates are consolidated, or after the stacked substrates are consolidated, but before carbonization.; -

During the carbonizing step the pitch powder melts and impregnates the fibers. Impregnation of the fiber with pitch results in significantly higher density and allows the elimination of additional processing steps necessary to increase the density of the carbon-carbon composite or preform. The carbon-carbon composite or preform can also be treated with antioxidant in a post carbonization step.

Carbon fibers. Carbon fibers are reinforcing fibers known for their light weight, high strength, and high sti ess, which are produced by pyrolysis of an organic precursor fiber in an inert atmosphere at high temperatures. These fibers may be' produced from several different types of materials known as precursor fibers, such as polyacrylonitrile (PAN), rayon and petroleum pitch. The carbon fibers are usually produced by controlled pyrolytic scission to remove the oxygen, nitrogen, and other non-carbon constituents of the precursor fiber, leaving only carbon in the fiber. Following this reducing step, the fibers are typically heat treated in a furnace to produce either carbon or graphite fibers. Carbon fibers are produced at furnace temperatures of 1,000-2,000° C, while graphite fibers require temperatures of 2,000-3,000° C.

Threads, bands and fabrics can be used as the fiber component: A high strength can be achieved by a straight orientation of the fibers. Two-dimensional (2-D) fabrics can also be used. If a high strength in all three directions of space is desirable, it is also possible to use fabrics that are woven in three directions of space, i.e., three-dimensional 3-D fabrics, with this invention.

**Carbon preforms.** A carbon-carbon composite preform is a fibrous reinforcement preshaped to the approximate contour and thickness desired in the finished part. The carbon-carbon composite preforms of the present invention generally include any carbon-carbon composite preform typically known and used in the art. Carboncarbon composite preforms are described for example in U.S. Patent No. 5,882,781 to Lawton et al., and U.S. Patent No. 6,691,393 to James et al., both of which are incorporated herein by reference in their entireties.

A carbon-carbon composite preform generally comprises a plurality of carbon fiber substrates that are agglomerated, and then joined or consolidated.) In one preferred embodiment, the carbon fibers of the preform are generally needle shaped. The carbon-carbon composite preforms that are used with this invention include woven fiber preforms, nonwoven fiber preforms, binder-treated random fiber preforms, rigidized preforms, and porous carbon body preforms.

Consolidation of the fibers can be done by any of the methods conventionally known in the art. For example, the fibers can be consolidated by needle punching together segments of fabric using traditional textile processing techniques. Other methods of consolidating the preforms include stitching methods, and using a liquid or dry adhesive combined with appropriate heat and pressure.

In one embodiment of the present invention, a plurality of carbon fiber substrates are provided which are stacked on top of each other to a desired thickness. The stacked substrates are joined or consolidated together and impregnated with pitch by adding pitch powder. The preform is then heated to a temperature above the resin or pitch melting point during carbonization. The pitch powder is melted so as to impregnate the carbon fibers. In a preferred embodiment of the present invention, the pitch powder is melted during the carbonization step. The timing of the addition of the pitch nay be before the carbon substrates are stacked, before the stacked substrates are consolildated, or after the stacked substrates are consolidated, but before carbonization. The density of the carbonized preforms produced by this method is approximately 1.0 gr m/cm³ or greater.

**Pitch.** The pitch can be any pitch that is generally known in the art. For example, the pitch can be a derivative of coal tar or petroleum. In addition, synthetic pitch precursors such as synthetic pitch, coal tar pitch, petroleum pitch, mesophase pitch, high char yield thermoset resin or combinations thereof can be used.

**Antioxidant.** As mentioned, the preforms can be additionally treated with an antioxidant after densification, Any antioxidants generally known in the art may be used. For example, the antioxidants, and methods of application, discussed in U.S. Patent No. 6,455,159 to Walker et at are suitable for use with this invention. U.S' Patent No. 6,455,159 to Walker et al. is incorporated herein by reference in its entirety.

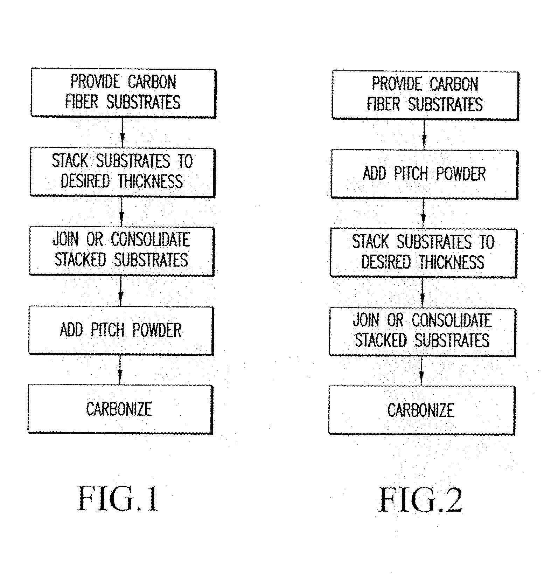

**Embodiments.** Figure 1 shows one embodiment of the inventive method for preparing a carbon-carbon composite preform of the present invention: To produce a conventional carbon-carbon composite part from a carbon fiber substrate that may be used, for example, for an aircraft brake disc, a plurality of carbon fiber substrates are available. These carbon fiber substrates comprise carbon fibers in a nob-woven or random fiber configuration. The substrates are stacked on top of each other to a desired thickness and then the stacked substrates are needle-punched together to join or consolidate the substrates to each other by intermingling carbon fibers between the layers of substrates.

While the preform is being created, powdered pitch is uniformly added to enhance the density of the carbon-carbon composite preform. The carbon-carbon composite preform is thus filled with pitch by adding pitch powder while the carbon substrates are being stacked together. A rwards, the pitch powder is melted so as to impregnate the fiber preform. In a highly preferred embodiment of the present invention, the pitch powder is melted during a subsequent carbonization step. The carbonization of the pitchimpregnated preforms results in an increase in the density of the carbonized preform. The density of the carbonized preform produced is approximately 1.0 gram/cm³ or greater.

FIG. 2 shows another embodiment of the method for preparing a carbon-carbon composite preform of the present invention. In this embodiment, pitch; powder is added to the carbon fiber substrates prior to stacking the substrates and joining or consolidating them into a preform. After the preform is created, the pitch powder is melted in order to impregnate the carbon fibers with pitch and enhance the density of the; preform. In a preferred embodiment of the present invention, the pitch powder is melted during a subsequent conventional carbonization step. The enhanced-density carbon-carbon composite preform is then further processed, as is typically done in the art. [0028] The present invention has been described herein in terms of preferred embodiments. However, obvious modifications and additions to the invention will be apparent to those skilled in the relevant arts upon reading the foregoing description. It is intended that all such modifications and additions form a part of the present invention.

## Claims

1. A method for preparing a carbon-carbon composite comprising:
(a) agglomerating a plurality of carbon fibers;
(b) joining or consolidating the agglomerated carbon fibers;
(c) adding pitch to the stacked substrates; and
(d) carbonizing the stacked substrates and pitch to form a carbon preform.

2. The method for preparing a carbon-carbon composite of claim 1, wherein the step of adding the pitch additionally comprises melting the pitch powder.

3. The method for preparing a carbon-carbon composite of claim 1, wherein the pitch is melted during the step of carbonizing the stacked substrate's.

4. The method for preparing a carbon-carbon composite of claim 1, wherein the carbon fibers comprise polyacrylonitrile.

5. The method for preparing a carbon-carbon composite of claim 1, wherein the carbon fibers are generally needle shaped.

6. The method for preparing a carbon-carbon composite of claim 1, wherein the pitch is added before consolidating the agglomerated fibers.

7. The method for preparing a carbon-carbon composite of claim 1, wherein the pitch is added to the carbon fibers before agglomerating the carbon fibers.

8. The method for preparing a carbon-carbon composite of claim 1, wherein the carbon fibers comprise a two-dimensional carbon fiber fabric.

9. The method the carbon fibers comprise for preparing a carbon-carbon composite of claim 1, wherein a three-dimensional carbon fiber fabric.

10. A carbon-carbon composite made by the method of claim 1.

11. The carbon-carbon composite of claim 10, wherein the density is approximately 1.0 gram/cm³ or greater.

12. The carbon-carbon composite of claim 10, wherein the pitch was melted during the step of carbonizing the stacked substrates.

13. The carbon-carbon composite of claim 10, wherein the pitch was added before consolidating the agglomerated fibers.

14. The carbon-carbon composite of claim 10, wherein the carbon fibers comprise polyacrylonitrile. The carbon-carbon composite of claim 10, wherein the step of adding the pitch additionally comprised melting the pitch powder.

15. The carbon carbon composite of claim 10, wherein the pitch was added before consolidating the agglomerated fibers.
